# EUROPÄISCHE PATENTSCHRIFT

(11) **EP 0 834 675 B1**
(45) Veröffentlichungstag und Bekanntmachung des Hinweises auf die Patenterteilung: **28.02.2001**
(21) Anmeldenummer: 97115237.6
(22) Anmeldetag: 03.09.1997
(51) Int. Cl.: F16F 15/10

(54) **Schwungscheibe fuer Verbrennungskraftmaschine**
Flywheel for an internal combustion engine
Volant pour un moteur à combustion interne

(30) Priorität: 21.09.1996 DE 19638843
(43) Veröffentlichungstag der Anmeldung: 08.04.1998
(73) Patentinhaber: Ford Global Technologies, Inc., Dearborn, Michigan 48126-2490 (US)
(72) Erfinder: Kastenholz, Matthias, 50679 Köln (DE); Kuske, Andreas, 62290 Maastricht (NL)
(74) Vertreter: Messulam, Alec Moses

(56) Entgegenhaltungen:
- EP-A- 0 690 233
- WO-A-91/02909
- DE-A- 3 739 192
- GB-A- 2 106 187
- US-A- 5 203 227
- US-A- 5 409 357
- US-A- 5 412 999
- PATENT ABSTRACTS OF JAPAN vol. 010, no. 295 (M-523), 7. Oktober 1986 (1986-10-07) & JP 61 108889 A (HITACHI LTD), 27. Mai 1986 (1986-05-27)

## Beschreibung

Die Erfindung betrifft eine Schwungscheibe für eine Verbrennungskraftmaschine, die mit auf einer Seitenfläche und am Umfang der Schwungscheibe verteilten Bohrungen versehen ist, deren Bewegungsbahn bei einer Drehung der Schwungscheibe in der Nähe eines Sensors liegt, wobei durch den Sensor die Drehposition und die Drehbewegung der Schwungscheibe aufnehmbar ist.

Die Bohrungen haben die Aufgabe, gleichmäßige Stege zwischen den Bohrungen zu erzeugen. Diese werden von einem Sensor gezählt und in Angaben über die Winkelpositionen des Schwungrades und damit der Kurbelwelle umgesetzt. Dabei ist natürlich erforderlich, daß die Winkelposition der Schwungscheibe relativ zur Kurbelwelle definiert festgelegt ist.

Schwungscheiben dieser Art sind in großer Zahl im Einsatz; sie weisen jedoch den Nachteil auf, daß durch die Anordnung von Bohrungen am Umfang der Scheibe und das zwischen den Bohrungen stehengebliebene Material, auch in Zusammenwirken mit dem Sensor, meist innerhalb bestimmter und von der jeweiligen Konstruktion abhängiger Drehzahlintervalle der Schwungscheibe Geräusche auftreten, die als Sirenen-Effekt charakterisiert werden können. Derartige Geräusche sind sehr störend und können das Wohlbehalten von Fahrzeuginsassen, wenn eine entsprechende Verbrennungskraftmaschine mit einer solchen Schwungscheibe verwendet wird. beeinträchtigen.

Maßnahmen zur Dämpfung dieser Erscheinung sind teuer und haben auch nicht den gewünschten technischen Erfolg.

Entsprechend ist es die Aufgabe der Erfindung, eine Schwungscheibe vorzuschlagen. die derartige Geräusche, insbesondere innerhalb bestimmter Drehzahlintervalle, mit einfachen Mitteln wesentlich vermindert oder völlig vermeidet.

Diese Aufgabe wird durch die Merkmale des Anspruchs 1 gelöst. Durch diese Maßnahme wird das störende Pfeifgeräusch wesentlich verringert oder sogar völlig beseitigt.

In Ausgestaltung der Erfindung ist die Ringnut im Querschnitt rechtwinklig ausgebildet. Dadurch ergeben sich besonders einfache Herstellverfahren.

Ein Ausführungsbeispiel der Erfindung ist in den Figuren dargestellt. Es zeigen:

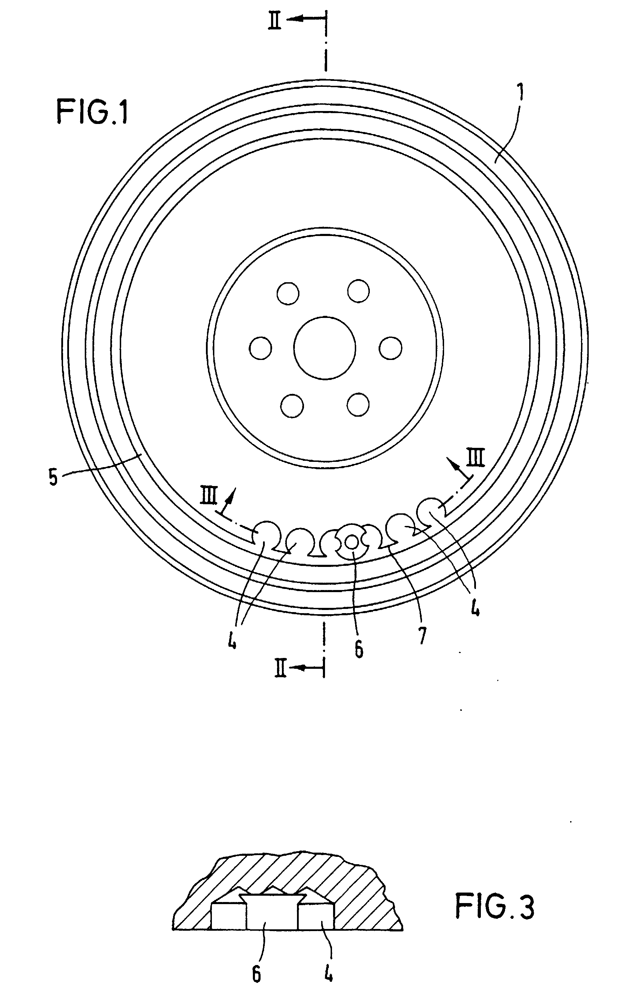

Fig. 1 eine Draufsicht auf die erfindungsgemäße Schwungscheibe;
Fig.2 einen Querschnitt entlang der Linie II-II der Schwungscheibe gemäß Fig. 1;
Fig.3 eine Einzelheit der Anordnung nach Fig. 1 entlang der Linie III-III, im Querschnitt gezeigt.

Eine Schwungscheibe 1 weist auf einer Seitenfläche 3 eine Vielzahl von Bohrungen 4 auf, die gleichmäßig auf dem Umfang verteilt sind. Zwischen den Bohrungen bleiben jeweils Stege 7 stehen. An einer Stelle ist der zwischen zwei Bohrungen befindliche Steg 7 durch Anordnung einer Kennbohrung 6 entfernt worden. Dadurch wird die Winkelposition der Schwungscheibe und somit auch der Kurbelwelle relativ zu den anderen Aggregaten der Verbrennungskraftmaschine definiert. Daraus können dann die für den Betrieb der Verbrennungskraftmaschine erforderlichen Daten wie Zündzeitpunkt usw bestimmt und gesteuert werden.

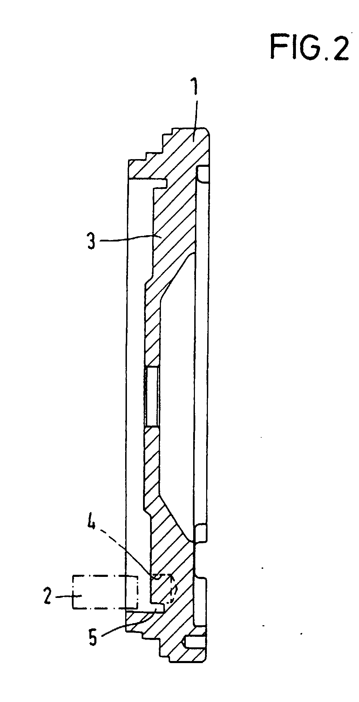

Über den Bohrungen 4 und der Kennbohrung 6 befindet sich ein Sensor 2; er ist in den Figuren in der Figur 2 schematisch dargestellt und ist in der Regel an anderen Teilen der Verbrennungskraftmaschine befestigt.

Auf der Seitenfläche 3 ist eine Ringnut 5 vorgesehen, die zu den Bohrungen 4 und der Kennbohrung 6 so verläuft, daß diese Bohrungen angeschnitten werden. Dabei ist von besonderer Bedeutung, daß eine unmittelbare Verbindung zwischen den Bohrungen 4 und 6 sowie der Ringnut 5 besteht.

Die Ringnut weist eine im Querschnitt rechteckige Form auf, wie insbesondere aus der Figur 2 hervorgeht; sie kann jedoch auch eine andere Form haben, etwa trapezförmig ausgebildet sein.

## Patentansprüche

1. Schwungscheibe für eine Verbrennungskraftmaschine, die mit auf einer Seitenfläche und am Umfang der Schwungscheibe verteilten Bohrungen mit dazwischen liegenden Stegen versehen ist, wobei an einer Stelle zur Festlegung der Position der Schwungscheibe in Drehrichtung unter Entfernung eines Steges eine Kennbohrung angeordnet ist und die Bohrungen sowie die Kennbohrung so angeordnet sind, daß ihre Bewegungsbahn bei einer Drehung der Schwungscheibe in der Nähe eines Sensors liegt, der die Winkelposition und die Drehbewegung der Schwungscheibe und somit der Kurbelwelle feststellt, **dadurch gekennzeichnet**, daß auf der Seitenfläche (3) der Schwungscheibe (1) eine Ringnut (5) in der Weise angeordnet ist, daß die Ringnut (5) die Bohrungen (4) und die Kennbohrung (6) anschneidet, so daß eine Verbindung zwischen den Bohrungen (4, 6) und der Nut (5) hergestellt ist.

2. Verbrennungskraftmaschine nach Anspruch 1, **dadurch gekennzeichnet**, daß die Ringnut (5) im Querschnitt rechteckig ausgebildet ist.

## Claims

1. A flywheel for an internal combustion engine, which is provided with bore holes on one side face, which bore holes are distributed about the circumference of the flywheel and have webs located therebetween, a reference bore hole being arranged in place of a web at one point for defining the position of the flywheel in the direction of rotation and the bore holes and the reference bore hole being so arranged that their movement path during rotation of the flywheel lies in the vicinity of a sensor, which determines the angular position and rotary motion of the flywheel and thus of the crankshaft, characterised in that an annular channel (5) is arranged on the side face (3) of the flywheel (1) in such a way that the annular channel (5) cuts into the bore holes (4) and the reference bore hole (6), such that a connection is established between the bore holes (4, 6) and the channel (5).

2. An internal combustion engine according to claim 1, characterised in that the annular channel (5) is of rectangular cross-section.

## Revendications

1. Volant d'inertie pour un moteur à combustion interne, qui est pourvu de perçages répartis sur une face latérale et sur la périphérie du disque, avec des nervures intermédiaires, un perçage d'identification étant disposé en un endroit, en supprimant une nervure, afin de déterminer la position du volant d'inertie dans la direction de rotation, et les perçages ainsi que le perçage d'identification étant disposés de telle sorte que leur voie de déplacement lors d'une rotation du volant d'inertie se trouve à proximité d'un capteur qui constate la position angulaire et la position de rotation du volant d'inertie et donc du vilebrequin, **caractérisé** en ce qu'une rainure annulaire (5) est disposée sur la face latérale (3) du volant d'inertie (1) de telle sorte que la rainure annulaire (5) coupe les perçages (4) et le perçage d'identification (6), de sorte qu'une liaison est réalisée entre les perçages (4, 6) et la rainure (5).

2. Moteur à combustion interne selon la revendication 1, **caractérisé** en ce que la rainure annulaire (5) est réalisée de section rectangulaire.
